# FASCICULE DE BREVET EUROPEEN

(11) **EP 2 536 972 B1**
(45) Date de publication et mention de la délivrance du brevet: **13.07.2016**
(21) Numéro de dépôt: 11702062.8
(22) Date de dépôt: 07.02.2011
(51) Int. Cl.: F21S 8/10, F21Y 105/00

(54) **DISPOSITIF OPTIQUE D'UN VEHICULE AUTOMOBILE COMPRENANT UNE SOURCE SURFACIQUE DE LUMIERE**
OPTISCHE VORRICHTUNG FÜR EIN MOTORFAHRZEUG MIT EINER OBERFLÄCHENLICHTQUELLE
OPTICAL DEVICE FOR A MOTOR VEHICLE INCLUDING A SURFACE LIGHT SOURCE

(30) Priorité: 15.02.2010 FR 1051018
(43) Date de publication de la demande: 26.12.2012
(73) Titulaire: Valeo Vision, 93012 Bobigny Cedex (FR)
(72) Inventeur: DUBOSC, Christophe, F-93250 Villemomble (FR); GODBILLON, Vincent, F-75011 Paris (FR); SANCHEZ, Vanesa, F-75011 Paris (FR); BOS, Patrice, F-93500 Pantin (FR); NEGRE, Luc, F-75014 Paris (FR)
(86) Numéro de dépôt international: PCT/EP2011/051763
(87) Numéro de publication internationale: WO 2011/098430

(56) Documents cités:
- EP-A1- 1 406 474
- EP-A1- 1 564 481
- EP-A1- 1 705 422
- EP-A1- 1 870 633
- EP-A2- 1 487 025
- WO-A1-2006/033040
- WO-A1-2006/033042
- DE-A1-102007 021 865
- US-A- 4 975 814
- US-A1- 2008 068 852

## Description

La présente invention concerne un dispositif optique, notamment pour véhicule automobile, tel qu'un dispositif d'éclairage et/ou de signalisation ayant notamment une fonction photométrique utile pour la circulation sur route du véhicule, permettant au véhicule d'être vu par d'autres véhicules ou au conducteur dudit véhicule de voir à l'extérieur.

Il est connu, notamment du document DE 10 2007 018 985, d'utiliser des sources surfaciques de lumière comme source de lumière d'un dispositif optique de véhicule automobile, en particulier une diode électroluminescente organique, encore appelée OLEDs ou DELOs. Dans le cas de DE 10 2007 018 985, le dispositif optique de véhicule automobile est un dispositif de signalisation d'un véhicule automobile. Bien qu'une source de lumière de type diode électroluminescente organique permette de fournir une lumière extrêmement homogène, elle comporte de nombreux inconvénients :
- D'abord, les diodes électroluminescentes organiques comprennent aujourd'hui des petites molécules, car elles sont les plus efficaces et davantage adaptées à la réalisation d'une fonction de signalisation dans un espace limité, par exemple une aile arrière de véhicule. Cependant, ces molécules doivent être protégées des molécules d'eau et d'oxygène, ce qui est réalisé avec des lames de verre. Les diodes électroluminescentes organiques utilisées pour réaliser une fonction de signalisation comprennent donc une lame de verre protectrice en contact avec la couche émettrice. Les lames de verre limitent fortement les formes possibles des diodes électroluminescentes organiques. Les diodes électroluminescentes organiques doivent donc avoir des surfaces planes ou à la limite des surfaces réglées et elles ne peuvent donc pas consister en un écran ayant n'importe quelle surface gauche comme une glace courante de dispositif optique d'un véhicule automobile. Ceci pose donc des problèmes de conception.
- Ensuite, la luminance fournie par une diode électroluminescente organique de technologie courante n'est pas suffisante pour assurer certaines fonctions de signalisation (comme les fonctions de signalisation « signalisation de ville », « signalisation de freinage » et « signalisation surélevée de freinage »). Une diode électroluminescente organique de technologie courante fournit typiquement une luminance de 1000 Cd/m² alors que pour assurer les fonctions précitées il faudrait une luminance de 5000 à 10 000 Cd/m². Néanmoins, une nouvelle technologie de diodes électroluminescentes organiques permet d'augmenter fortement la directivité d'émission de la diode dans la direction perpendiculaire à sa surface émettrice. Ainsi, sans augmenter l'émittance de la diode, la luminance peut être augmentée fortement, par exemple d'un facteur 10 pour atteindre environ 10 000 Cd/m². Cependant, une diode électroluminescente organique de cette technologie est très directive. En conséquence, elle présente en plus de l'inconvénient mentionné précédemment, celui de devoir être orientée dans l'axe longitudinal du véhicule ou plus généralement dans la direction vers laquelle elle doit émettre la lumière. Ceci pose donc des problèmes de conception, notamment des problèmes d'encombrement et de design.

En conséquence, l'utilisation d'une diode électroluminescente organique dans un dispositif d'éclairage et/ou de signalisation de véhicule automobile n'est viable que si cette surface est une surface réglée. On peut alors réaliser un dispositif d'éclairage ou de signalisation en déposant une diode électroluminescente organique sur un substrat souple. Les performances d'une telle technologie sont très faibles en comparaison avec les technologies où les diodes sont déposées sur un substrat en verre plan.

Il est également connu du document DE 10 2007 018 986 un dispositif d'éclairage d'un habitacle d'un véhicule automobile comprenant :
- un ensemble de diodes électroluminescentes organiques sur lesquelles sont collés un premier élément optique, et
- un deuxième élément optique.

Il est encore connu des documents DE 202 07 799 et EP 1 485 959 des dispositifs de signalisation de véhicules automobiles comprenant une diode électroluminescente organique recouverte d'un élément optique comprenant une répétition spatiale d'un motif dans le but d'améliorer les performances de la diode grâce au fait que les rayons sont moins facilement piégés en réflexion totale et peuvent ainsi plus facilement sortir du substrat transparent. Cette technologie n'a de sens que si l'élément optique est collé au substrat, autrement dit si l'élément optique est collé sur un plan. De tels dispositifs de signalisation ne permettent pas de résoudre les problèmes mentionnés plus haut.

On connaît également du document FR 2 926 677 un dispositif de diode électroluminescente organique émettant un faisceau lumineux présentant une forte directivité. Une telle diode électroluminescente organique comprend, entre ces deux électrodes, différentes couches, notamment une couche émettrice de lumière, une couche favorisant le transport des électrons jusqu'à la couche émettrice et une couche favorisant le transport des trous jusqu'à la couche émettrice. L'ensemble de ces couches constitue une microcavité dont l'épaisseur est ajustée pour créer une résonance optique. Il résulte d'une telle structure une émission d'un faisceau de lumière présentant une forte directivité.

Le document EP 1870633 divulge un dispositif optique de véhicule automobile selon le préambule de la revendication 1.

Le but de l'invention est de fournir un dispositif optique de véhicule automobile, notamment un dispositif d'éclairage et/ou de signalisation simple et compatible avec les nombreuses contraintes d'encombrement et de design auxquelles sont soumis ces dispositifs.

Un objet de l'invention est un dispositif optique de véhicule automobile, notamment un dispositif d'éclairage et/ou de signalisation d'un véhicule automobile, comprenant une première source surfacique de lumière émettant des rayons lumineux. Le dispositif optique de véhicule automobile selon l'invention comprend un système optique réfléchissant déviant les rayons lumineux émis par la première source surfacique de lumière. Ainsi, il est possible de s'affranchir de contraintes de position de la première source de lumière. Selon un mode de réalisation, le dispositif optique comprend un boîtier contenant la source surfacique et le système optique réfléchissant. Ce boîtier est fermé par une glace de fermeture, par laquelle sortent les rayons réfléchis par le système optique réfléchissant.

De préférence, le système optique présente des moyens, notamment des motifs, permettant de s'affranchir des risques d'éblouissement de conducteurs de véhicules lorsque des rayons solaires se réfléchissent sur la source lumineuse, notamment lorsque celle-ci est une diode électroluminescente organique. En effet, ainsi, les rayons du soleil après s'être réfléchis sur le système optique, s'être réfléchis sur la diode électroluminescente organique et s'être réfléchis, de nouveau, sur le système optique sont renvoyés dans toutes les directions et le risque d'éblouissement est pratiquement nul.

En particulier, la première source surfacique de lumière peut émettre des rayons lumineux selon une première direction et le système optique réfléchissant peut dévier les rayons lumineux émis selon la première direction, dans une deuxième direction distincte de la première direction. Ainsi, la première source de lumière n'est pas nécessairement orientée selon la direction dans laquelle le dispositif optique doit émettre de la lumière.

Le système optique réfléchissant peut être constitué par une ou plusieurs parties. Ainsi, il est possible de réaliser un dispositif optique présentant un faible encombrement.

Le dispositif peut comprendre une deuxième source surfacique de lumière. De ce fait, il est possible d'augmenter la luminance du dispositif et/ou d'assurer plusieurs fonctions nécessitant des lumières de plusieurs couleurs et/ou de répondre à des contraintes d'encombrement du dispositif optique.

De préférence, au moins une partie du système optique réfléchissant fait partie d'une deuxième source surfacique de lumière. Ainsi, il est possible de limiter le nombre d'éléments constituant le dispositif optique. Notamment, le système optique réfléchissant peut être, au moins en partie, une électrode d'une diode électroluminescente organique. La diode électroluminescente organique peut être placée adjacente à une surface réfléchissante d'un miroir. Dans ce cas le système optique réfléchissant comprend à la fois la partie réfléchissante de la deuxième source surfacique de lumière et le miroir. Il est également possible de réaliser un système réfléchissant sans miroir associé, où le système optique réfléchissant fait partie de la deuxième source surfacique de lumière, c'est-à-dire que ce système réfléchissant est réalisé par au moins une partie d'une deuxième source surfacique de lumière.

Le système optique réfléchissant peut présenter une géométrie assurant un étalement des faisceaux lumineux émis par la première source surfacique. Ceci permet d'obtenir une répartition lumineuse désirée des rayons lumineux émis et d'obtenir un aspect particulier du dispositif d'éclairage et/ou de signalisation.

La première source surfacique de lumière est une diode électroluminescente organique. En effet, cette technologie est maintenant répandue et son coût en baisse.

La première source surfacique peut être transparente. Ainsi, la lumière émise par la deuxième source surfacique peut sortir du dispositif optique après avoir traversé la première source surfacique. Ainsi, selon des modes de réalisation où la première source surfacique est positionnée devant le système optique réfléchissant, une partie des rayons réfléchis qui rencontreront la première source surfacique la traverseront. Cela permet de moins perdre de puissance lumineuse.

L'aire d'émission de la source surfacique de lumière est supérieure à 1 cm². Pour améliorer la visibilité de la fonction, cette surface peut être supérieure à 10 cm².

De préférence, la première source lumineuse présente une forte directivité d'émission dans la direction perpendiculaire à sa surface émettrice, comparativement aux diodes électroluminescentes lambertiennes. Ainsi, sans augmenter l'émittance de la source lumineuse, la luminance dans une direction donnée peut être augmentée fortement, par exemple d'un facteur 5 à 10, autour de la direction perpendiculaire à la surface. Avantageusement, la première source lumineuse a une luminance d'au moins 5 000 Cd/m2 et, de préférence, d'au moins 10 000 Cd/m2. Il existe aujourd'hui des diodes électroluminescentes organiques comportant des moyens leur conférant cette directivité et cette luminance. Par exemple, il est possible d'utiliser des diodes électroluminescentes organiques telles que celles décrites dans le brevet FR2926677. Par exemple, la forte directivité de la source lumineuse surfacique est caractérisée par le fait que la loi d'intensité lumineuse de cette source en fonction de l'angle d'émission, θ, est une loi du type :
cos(θ)^n ;
n étant une puissance variant entre 10 et 20.
par « du type cos(θ)^n », on entend une fonction de l'angle d'émission θ, évoluant de la même manière que la fonction cos(θ)^n.

Selon un mode de réalisation, le dispositif optique est un dispositif permettant la réalisation d'une fonction de signalisation telle qu'une fonction de signalisation de position du véhicule, une fonction de signalisation de changement de direction, une fonction de signalisation de recul, signalisation de freinage, une fonction de signalisation de position en cas de brouillard.

Selon une variante de réalisation, le dispositif optique de véhicule automobile selon l'invention permet par exemple d'assurer une fonction d'éclairage de la route, tel qu'une fonction de faisceau route, une fonction d'éclairage de croisement, une fonction d'éclairage antibrouillard,

Selon une variante de réalisation, le dispositif optique de véhicule automobile selon l'invention permet par exemple d'assurer une fonction d'éclairage de l'habitacle.

Selon une variante de l'invention, le dispositif optique de véhicule automobile selon l'invention est agencé pour réaliser une lumière intérieure de décoration dans l'habitacle du véhicule.

La première source surfacique peut comprendre plusieurs éléments surfaciques émettant de la lumière, notamment plusieurs diodes électroluminescentes organiques. Ainsi, il est possible de suivre plus finement le galbe d'une glace de fermeture d'un dispositif optique.

La source surfacique de lumière comporte une diode électroluminescente organique (OLED).

Un autre objet de l'invention est un véhicule automobile comprenant un dispositif optique défini précédemment.

Les dessins annexés représentent, à titre d'exemples, différents modes de réalisation d'un dispositif optique selon l'invention.
La figure 1 est un schéma de principe d'un premier mode de réalisation d'un dispositif optique de véhicule automobile selon l'invention.
La figure 2 est un schéma de principe d'un deuxième mode de réalisation d'un dispositif optique de véhicule automobile selon l'invention.
La figure 3 est un schéma de principe d'un troisième mode de réalisation d'un dispositif optique de véhicule automobile selon l'invention.
La figure 4 est un schéma de principe d'un quatrième mode de réalisation d'un dispositif optique de véhicule automobile selon l'invention.
La figure 5 est un schéma de principe d'un cinquième mode de réalisation d'un dispositif optique de véhicule automobile selon l'invention.
La figure 6 est un graphique représentant une figure d'étalement d'un faisceau lumineux obtenue par une première méthode d'étalement.
La figure 7 est un graphique représentant une figure d'étalement d'un faisceau lumineux obtenue par une deuxième méthode d'étalement.
La figure 8 est un schéma en coupe d'une diode électroluminescente organique.

Le principe de l'invention est d'utiliser, dans un dispositif optique d'un véhicule automobile, une source surfacique de lumière, étant une diode électroluminescente organique présentant en particulier une forte directivité et une forte luminance perpendiculairement à sa surface, et de l'associer à un système optique réfléchissant placé à distance de la source. Le système optique réfléchissant présente la fonction de dévier globalement les rayons lumineux émis par la diode électroluminescente, ce qui permet de positionner la diode dans une position non nécessairement perpendiculaire à la direction souhaitée des rayons lumineux utiles pour le dispositif optique. De préférence, il présente aussi la fonction d'étaler les rayons lumineux.

Ainsi, un rayon issu de la source surfacique de lumière et orienté perpendiculairement à la surface de cette source est dévié par le système optique réfléchissant pour être dirigé à l'extérieur du dispositif optique dans une direction choisie, par exemple parallèle à l'axe longitudinal du véhicule automobile.

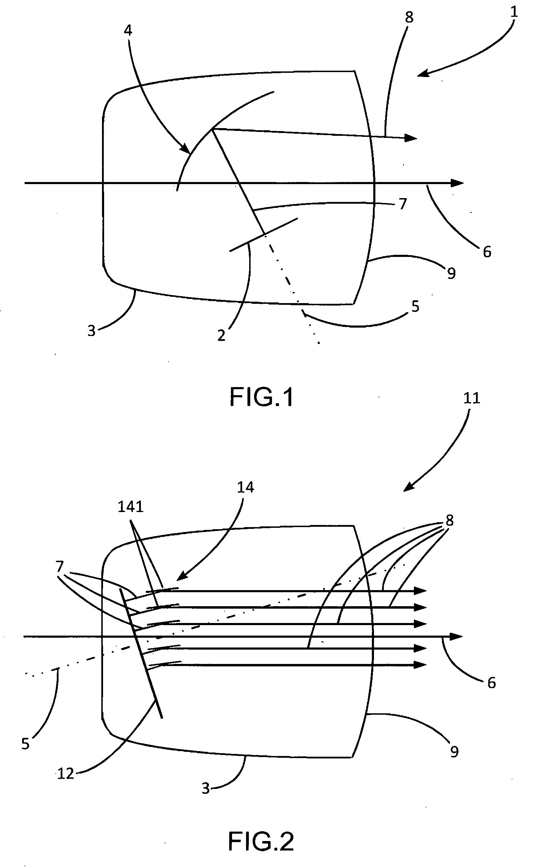

Le principe d'un dispositif 1 optique d'un véhicule automobile est également décrit ci-après en référence à la figure 1. Le dispositif optique permet par exemple d'assurer l'une des fonctions suivantes : éclairage de route, éclairage de croisement, éclairage antibrouillard, signalisation de position du véhicule, signalisation de changement de direction, signalisation de recul, signalisation de freinage, signalisation en cas de brouillard.

La figure 1 illustre un dispositif d'éclairage et/ou de signalisation. Comme vu précédemment cela n'est pas limitatif, le dispositif optique de véhicule automobile selon l'invention pouvant être également, par exemple, un dispositif de l'intérieur de l'habitacle. Le dispositif d'éclairage et/ou de signalisation comprend principalement :
- une enceinte fermée, formée par un boîtier 3 et une glace de fermeture 9,
- une première source surfacique de lumière 2, et
- un système optique réfléchissant 4.

Le système optique réfléchissant est positionné, au moins localement, à distance de la première source surfacique de lumière.

Lorsque la première source surfacique de lumière est active, elle émet un faisceau de rayons 7 principalement selon une première direction 5, par exemple perpendiculaire à la surface de la source. Ce faisceau de rayons est dévié et, éventuellement mis en forme par le système optique réfléchissant 4. Les rayons 8 ainsi obtenus sortent du dispositif optique au travers de la glace de fermeture 9 et assurent ainsi la fonction optique. De préférence, les rayons sortant du dispositif optique sont globalement parallèles à une deuxième direction 6 choisie selon la fonction optique assurée. Selon la fonction optique assurée, le faisceau formé par les rayons 8 peut présenter un étalement plus ou moins important, c'est-à-dire que ces rayons 8 sont inscrits dans un cône ayant un axe parallèle à la deuxième direction 6 et ayant un angle au sommet plus ou moins important, cet angle correspondant à l'étalement. Par ailleurs, ce cône n'est pas nécessairement de révolution. En effet, pour de nombreuses fonctions optiques, il est intéressant que la section de ce cône perpendiculairement à la direction 6 présente une hauteur inférieure à sa largeur.

De préférence, le système optique réfléchissant s'étend sur toute la surface en regard de la première source surfacique de lumière relativement à la direction principale d'émission de lumière de la source surfacique. Ainsi, chaque rayon lumineux ou au moins la plupart des rayons lumineux émis par la première source surfacique de lumière selon la direction principale d'émission sont déviés par le système optique réfléchissant de sorte qu'ils sortent du dispositif optique en étant inscrits dans des cônes identiques à celui mentionné précédemment.

Par exemple, le système optique 4 peut consister en un simple miroir, par exemple un miroir plan ou un miroir ayant une forme gauche. De préférence, la géométrie du miroir permet de diriger globalement les rayons émis par la première source surfacique de lumière dans la deuxième direction 6 requise par la fonction d'éclairage et/ou de signalisation. De préférence encore, la géométrie du miroir permet également de produire un étalement des faisceaux lumineux comme évoqué précédemment.

Le système optique réfléchissant peut présenter des motifs élémentaires réfléchissants. Ces motifs élémentaires réfléchissants peuvent être plans. Ainsi, les faisceaux lumineux élémentaires reçus par les motifs élémentaires de la première source surfacique de lumière sont reflétés sans être étalés. Néanmoins, les motifs élémentaires réfléchissants peuvent aussi être bombés. Ainsi, les faisceaux lumineux élémentaires reçus par les motifs élémentaires de la première source surfacique de lumière sont reflétés en étant étalés.

Par exemple, la première direction et la deuxième direction peuvent former un angle d'au moins 10°.

En particulier, la première source surfacique de lumière peut être positionnée horizontalement. Elle peut également présenter un bord suivant le galbe de la glace de fermeture du dispositif.

Dans une variante, la première source surfacique de lumière peut être du type émettant de la lumière sur chacune de ses faces : il peut s'agir d'une diode électroluminescente organique présentant deux électrodes transparentes. Dans ce cas, le dispositif peut présenter un système optique réfléchissant permettant de réfléchir les rayons lumineux émis par chacune des faces de la source surfacique.

Un deuxième mode de réalisation 11 du dispositif optique représenté à la figure 2, diffère du premier mode de réalisation de la figure 1 principalement en ce que le système optique réfléchissant 14 est réalisé en plusieurs éléments 141, ces éléments étant illuminés par la première source surfacique de lumière 12. Grâce à une telle constitution, il est possible d'utiliser une source surfacique de grandes dimensions sans que le système optique réfléchissant présente lui de grandes dimensions.

Les différents éléments 141 peuvent par exemple être positionnés parallèlement les uns aux autres et/ou à même distance les uns des autres.

De préférence, les différents éléments pourront être agencés sous forme de lamelles horizontales ou sensiblement horizontales entre la première source surfacique et la glace de fermeture. En effet, un tel agencement permet de limiter les effets indésirables de réflexion des rayons solaires sur la source surfacique de lumière. De plus, un tel agencement produit un effet esthétique.

Les différents éléments peuvent interagir entre eux, c'est-à-dire qu'un rayon lumineux réfléchi par l'un des éléments peut-être réfléchi par un autre des éléments.

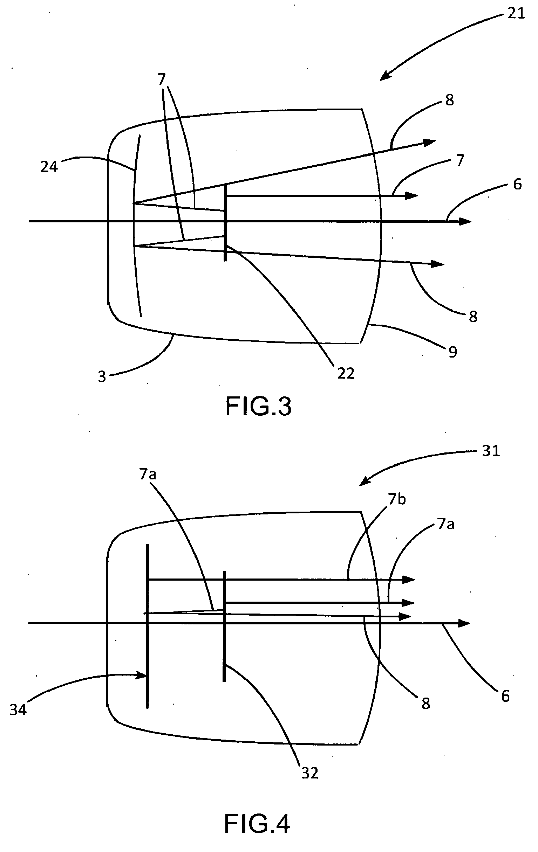

Un troisième mode de réalisation 21 du dispositif optique représenté à la figure 3 diffère du premier mode de réalisation de la figure 1 principalement en ce que la première source surfacique de lumière 22 est du type transparente et en ce qu'elle est positionnée en avant du système optique réfléchissant 24 relativement à la direction 6. Ainsi, la première source surfacique de lumière émet de la lumière depuis chacune de ses faces. Avec une telle configuration, des rayons lumineux émis par une face de la première source surfacique sortent du dispositif optique sans être déviés par le système optique réfléchissant, alors que les rayons lumineux émis par l'autre face de la première source surfacique sortent du dispositif optique après avoir été dévié par le système optique réfléchissant. Parmi les rayons réfléchis, certains atteignent la glace de fermeture directement après réflexion sur le système optique réfléchissant et d'autres atteignent la glace de fermeture après avoir traversé la première source surfacique de lumière. Il est à noter qu'une partie des rayons lumineux est absorbée lors de la traversée de la première source surfacique de lumière.

Dans la configuration représentée, l'aire du système optique 24 réfléchissant est supérieure à l'aire de la première source surfacique de lumière 22. Néanmoins, l'inverse est envisageable.

Un quatrième mode de réalisation 41 du dispositif optique représenté à la figure 4 diffère du troisième mode de réalisation de la figure 3 principalement en ce que le système optique réfléchissant 34 fait partie d'une deuxième source surfacique de lumière. De préférence, le système optique réfléchissant 34 fait partie d'une diode électroluminescente organique. Notamment, le système optique réfléchissant 34 est une électrode de la diode électroluminescente organique.

La deuxième source surfacique de lumière peut consister en une seule diode électroluminescente organique ou un ensemble de plusieurs diodes électroluminescentes organiques approchant une surface gauche ou une diode électroluminescente organique ayant une surface gauche.

Dans ce mode de réalisation, outre la première source surfacique de lumière 32 dont le cheminement des rayons lumineux est décrit avec le mode de réalisation précédent, la deuxième source surfacique de lumière émet des rayons lumineux. Au moins certains de ceux-ci atteignent la glace de fermeture du dispositif optique après avoir traversé la première source surfacique de lumière 32. En variante, on peut agencer cette deuxième source surfacique de lumière de manière à ce que, bien que la deuxième source surfacique de lumière réfléchisse des rayons émis vers l'arrière par la première source surfacique de lumière, les rayons émis par cette deuxième source surfacique de lumière atteignent la glace sans traverser la première source surfacique de lumière.

Par exemple, la première source surfacique de lumière et la deuxième source de lumière peuvent émettre des rayonnements de longueurs d'onde différentes et donc de couleurs différentes.

Les première et deuxième sources surfaciques de lumière peuvent être activées simultanément ou indépendamment l'une de l'autre. Notamment, l'activation de la première source surfacique de lumière peut permettre d'assurer une première fonction, l'activation de la deuxième source surfacique de lumière peut permettre d'assurer une deuxième fonction et l'activation simultanée des deux sources surfaciques de lumière peut permettre d'assurer une troisième fonction.

La deuxième source surfacique de lumière peut être lambertienne.

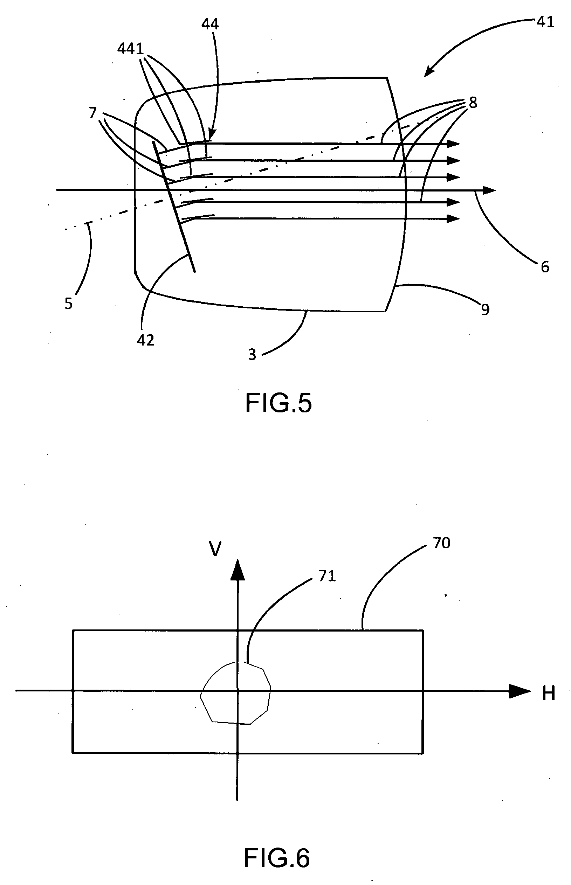

Un cinquième mode de réalisation 41 du dispositif optique représenté à la figure 5 diffère du deuxième mode de réalisation représentée à la figure 2 en ce que le système optique réfléchissant 44 est réalisé en plusieurs éléments 441, ces éléments étant des deuxièmes sources surfaciques de lumière et étant illuminés par la première source surfacique de lumière. Grâce à une telle constitution, il est possible d'utiliser une source surfacique de grandes dimensions sans que le système optique réfléchissant présente lui de grandes dimensions.

De préférence, les différents éléments 441 sont des diodes électroluminescentes organiques. Elles peuvent être du type transparent, c'est-à-dire avec émission de lumière sur chaque face ou du type non-transparent, c'est-à-dire avec émission de lumière sur une seule face.

Les différents éléments 441 peuvent interagir entre eux, c'est-à-dire qu'un rayon lumineux émis ou réfléchi par l'un des éléments peut-être réfléchi par un autre des éléments.

Les deuxièmes sources surfaciques de lumière peuvent être lambertiennes.

Les plans de coupe des différents schémas des figures 1 à 5 peuvent aussi bien être verticaux, qu'horizontaux. Ils peuvent même être inclinés.

Dans un autre mode de réalisation non représenté, le dispositif optique comprend deux sources surfaciques de lumière ou plus. Ces deux sources peuvent être disposées côte à côte. Elles peuvent émettre de la lumière principalement selon deux directions distinctes. Un système optique permet de dévier et de mettre en forme les faisceaux de rayons lumineux émis par les différentes sources. Les faisceaux de rayons lumineux ainsi obtenus peuvent être globalement orientés selon la même direction. Alternativement, les faisceaux lumineux issus de la première source 21 peuvent être déviés globalement selon une première direction et les faisceaux lumineux issus de la deuxième source 22 être déviés globalement selon une deuxième direction, ces première et deuxième directions étant distinctes.

La partie du système optique réfléchissant en regard de la première source de lumière pourra présenter des caractéristiques optiques différentes de la partie du système optique en regard de la deuxième source de lumière. De préférence, dans un tel cas, les variations de caractéristiques pourront être progressives pour éviter toute brusque variation d'aspect du dispositif optique. Les sources lumineuses peuvent être disposées jointivement ou non, en orientant leur plan d'émission différemment. Le système optique réfléchissant permet de conférer la direction globale voulue au faisceau provenant de chaque source indépendante. Il est ainsi possible de s'affranchir des contraintes d'orientation des sources surfaciques. Ainsi la disposition des sources surfaciques peut être effectuée en fonction de la conception du dispositif optique, par exemple pour suivre son galbe. Le système optique sera ensuite adapté pour conférer la direction globale et l'étalement souhaité des faisceaux lumineux. Un tel mode de réalisation permet également de donner un aspect éteint différent de l'aspect allumé, la surface de la source surfacique, par exemple la diode électroluminescente organique, n'étant pas perçue pareillement selon qu'elle est allumée ou éteinte, surtout lorsqu'elle émet de façon fortement directive. Ce dernier mode de réalisation peut bien entendu être combiné avec les autres modes de réalisation décrits précédemment.

Avantageusement, les première et deuxième sources de lumière émettent de la lumière de couleurs différentes et peuvent être activées indépendamment l'une de l'autre. Ainsi, le dispositif optique peut assurer plusieurs fonctions, notamment plusieurs fonctions nécessitant des couleurs différentes, le dispositif optique présentant néanmoins un aspect homogène depuis l'extérieur de la glace de fermeture lorsque les sources de lumière sont éteintes. Par exemple, le dispositif peut assurer à la fois une fonction de signalisation de position arrière et une fonction de signalisation de changement de direction.

Comme expliqué précédemment, dans plusieurs applications d'éclairage automobile, il est intéressant d'étaler les rayons lumineux. Notamment, il est souvent intéressant d'avoir un plus grand étalement des rayons lumineux selon un axe horizontal que selon un axe vertical. Le système optique réfléchissant peut être agencé et conçu pour permettre un étalement de la lumière, autour de la direction principale du faisceau lumineux. Le faisceau lumineux correspond alors à un ensemble de rayons contenus dans un cône, dont l'axe représente la direction d'émission. La largeur du cône correspond à l'étalement. Un exemple de faisceau est représenté à la figure 6. Cet exemple de faisceau est représenté schématiquement sous forme rectangulaire 70, néanmoins le faisceau peut présenter toute autre forme. Cette figure 6 correspond à un écran sur lequel est projeté le faisceau lumineux du dispositif optique. Cet écran est en principe vertical, l'axe V correspondant à l'axe de la verticale et l'axe H à l'horizon. Sur la figure 6, est illustrée la section du faisceau lumineux 71, tel qu'il serait sans agencement pour provoquer un étalement du faisceau. Le faisceau serait beaucoup plus concentré. Grâce à différents modes de réalisation de systèmes optiques réfléchissants en concevant le système optique réfléchissant pour dévier une partie des rayons de part et d'autre de la direction principale d'émission de la lumière, on obtient à une distance déterminée, par exemple à 10 mètres ou à 25 mètres, du dispositif optique le faisceau étalé 70. Dans ces modes d'exécution, chaque faisceau lumineux, aussi élémentaire soit-il, notamment chaque faisceau lumineux impactant l'ensemble d'un motif élémentaire du système optique réfléchissant, est étalé.

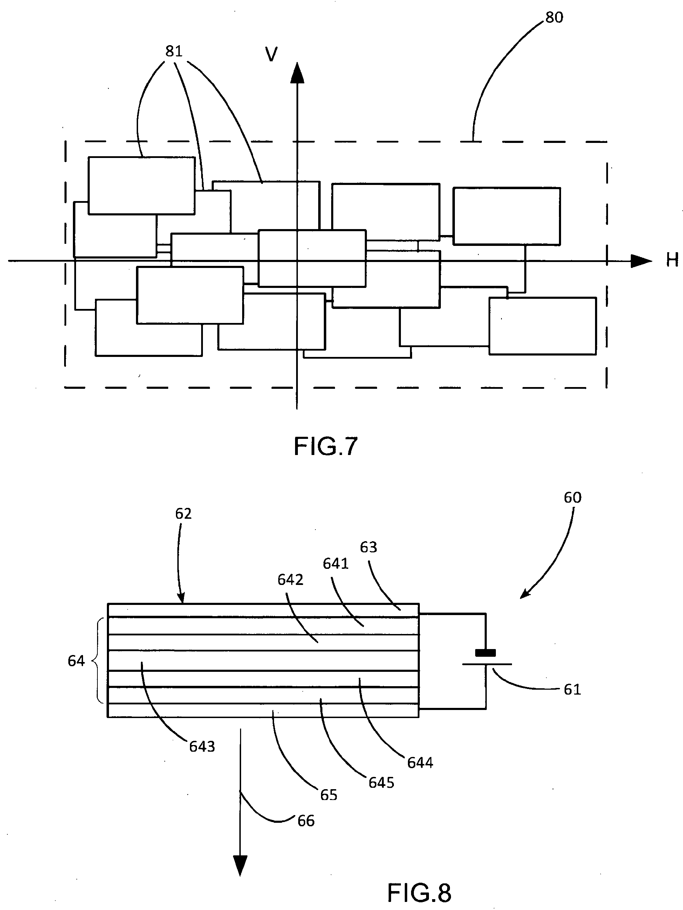

Dans d'autres modes d'exécution du dispositif optique, le même effet d'étalement est obtenu différemment ainsi que représenté à la figure 7. En effet, il n'y a pas d'étalement de chaque faisceau élémentaire. La fonction d'étalement est obtenue par des déviations des faisceaux élémentaires selon différentes directions autour de la deuxième direction 6. Des moyens d'étalement des rayons lumineux sont constitués par un ensemble de moyens de déviation. Un exemple de figure de diffusion ou de figure d'étalement est représenté à la figure 7. Cet exemple de figure est représenté schématiquement sous forme rectangulaire 80, néanmoins la figure peut présenter toute autre forme. Dans ce mode d'exécution, un faisceau lumineux élémentaire, notamment un faisceau lumineux impactant l'ensemble d'un motif élémentaire du système optique réfléchissant, n'est pas étalé. Ainsi, on obtient, à partir d'un faisceau lumineux impactant un ensemble de motifs élémentaires d'un dioptre du système optique, un ensemble de faisceaux lumineux (dont les sections 80 sont représentées à la figure 7) issus des motifs élémentaires et orientés dans différentes directions. La superposition non complète et décalée des différentes tâches lumineuses de manière répartie sur l'ensemble de la zone d'étalement du faisceau 80, permet de générer le faisceau global.

Alternativement, il est possible d'utiliser de manière complémentaire les deux principes décrits précédemment. En effet, il est possible d'assurer la fonction d'étalement grâce à l'effet combiné de motifs élémentaires ayant une fonction d'étalement et étant agencés de manière à ne pas tous émettre la lumière selon une même direction.

La ou les sources surfaciques de lumière peuvent être de tous types. Néanmoins, les sources de lumière du type diode électroluminescente organique sont préférées. Un tel dispositif 60 de diode électroluminescente organique est représenté à la figure 8. Le dispositif comprend une diode électroluminescente organique 62 et un générateur de tension électrique 61. La diode électroluminescente organique comprend plusieurs couches : une cathode 63, une anode 65 et une couche organique 64. Lorsque la couche organique est soumise à une tension électrique, elle émet un rayonnement lumineux 66 se propageant au travers de l'anode 65 qui est transparente relativement à ce rayonnement. La couche organique peut éventuellement comprendre différentes strates 641 à 645 en matériaux organiques différents. De préférence, on utilise des diodes électroluminescentes organiques comprenant des strates supplémentaires. En plus de la strate 643 émettrice de lumière, la couche organique comprend une strate 641 favorisant le transport des électrons jusqu'à la strate émettrice 643 et une strate 645 favorisant le transport des trous, à savoir des absences d'électrons, jusqu'à la strate émettrice 643. La couche organique peut aussi comprendre une strate 642 bloquant les trous provenant des strates inférieures, 643 à 645, et une strate 644 bloquant les électrons provenant des strates supérieures 641 à 643. L'ensemble de ces strates constitue une microcavité dont l'épaisseur est ajustée pour créer une résonance optique. Ainsi, on réalise des réflecteurs interférentiels sélectifs qui constituent des cavités résonnantes. Par exemple, on peut utiliser une diode électroluminescente organique du type décrit dans le document FR 2 926 677 mentionné plus haut.

L'aire émettrice des sources surfaciques de lumière est supérieure à 1 cm², préférentiellement supérieure à 10 cm².

De préférence, dans les modes de réalisation décrits précédemment, les motifs élémentaires prévus sur le système optique réfléchissant ont typiquement des tailles comprises entre 0,5 mm et 1 mm, voire comprises entre 0,2 mm et 5 mm, voire jusqu'à 10 mm. Ainsi, ils peuvent être produits grâce à des moules obtenus avec des moyens d'usinage classique.

On comprend que, grâce au dispositif optique selon l'invention, la source surfacique de lumière peut-être plane et peut ne pas être nécessairement orientée suivant la direction dans laquelle les rayons lumineux sont censés se propager hors du dispositif. Ainsi, l'implantation d'une source surfacique de lumière dans un dispositif optique est simplifiée. Il est ainsi possible d'utiliser des diodes électroluminescentes organiques à forte luminance sans pour autant subir des contraintes rédhibitoires de positionnement de celles-ci. En outre, l'effet d'étalement du système optique permet de résoudre des problèmes de réflexion que posait la présence d'une diode électroluminescente sans système optique.

## Revendications

1. Dispositif optique (1 ; 11 ; 21 ; 31 ; 41) d'un véhicule automobile, notamment un dispositif de signalisation et/ou d'éclairage, comprenant une première source surfacique de lumière (2 ; 12 ; 22 ; 32 ; 42) émettant des rayons lumineux (7) et un système optique réfléchissant (4 ; 14 ; 24 ; 34 ; 44) déviant les rayons lumineux émis par la première source surfacique de lumière, **caractérisé en ce que** l'aire d'émission de la première source surfacique de lumière est supérieure à 1 cm² et **en ce que** la première source surfacique (2 ; 12 ; 22 ; 32 ; 42) de lumière est une diode électroluminescente organique (62).

2. Dispositif selon la revendication 1, **caractérisé en ce que** la première source surfacique de lumière émet des rayons lumineux (7) selon une première direction (5) et **en ce que** le système optique réfléchissant dévie les rayons lumineux émis selon la première direction (5), dans une deuxième direction (6) distincte de la première direction.

3. Dispositif selon la revendication 1 ou 2, **caractérisé en ce que** le système optique réfléchissant est constitué par une ou plusieurs parties (4; 14;24; 34; 44).

4. Dispositif selon l'une des revendications précédentes, **caractérisé en ce que** le dispositif comprend une deuxième source surfacique de lumière (34 ; 441).

5. Dispositif selon l'une des revendications précédentes, **caractérisé en ce que** au moins une partie du système optique réfléchissant (34 ; 441) fait partie d'une deuxième source surfacique de lumière.

6. Dispositif selon la revendication précédente, **caractérisé en ce que** le système optique réfléchissant est une électrode d'une diode électroluminescente organique.

7. Dispositif selon l'une des revendications précédentes, **caractérisé en ce que** le système optique réfléchissant présente une géométrie assurant un étalement des faisceaux lumineux émis par la première source surfacique.

8. Dispositif selon l'une des revendications précédentes, **caractérisé en ce que** la première source surfacique est transparente.

9. Dispositif selon la revendication 1, **caractérisé en ce que** l'aire d'émission de la première source surfacique de lumière est supérieure à 10 cm².

10. Dispositif selon l'une des revendications précédentes, **caractérisé en ce que** la première source lumineuse présente une forte directivité d'émission dans la direction perpendiculaire à sa surface émettrice, comparativement aux diodes électroluminescentes lambertiennes.

11. Dispositif selon l'une des revendications précédentes, **caractérisé en ce que** la première source lumineuse a une luminance d'au moins 5 000 Cd/m².

12. Dispositif selon l'une des revendications précédentes, **caractérisé en ce que** ledit dispositif est un feu de signalisation.

13. Dispositif selon l'une des revendications précédentes, **caractérisé en ce que** la première source surfacique comprend plusieurs éléments surfaciques émettant de la lumière,

## Patentansprüche

1. Optische Vorrichtung (1; 11; 21; 31; 41) eines Kraftfahrzeugs, insbesondere eine Signalgebungs- und/oder Beleuchtungsvorrichtung, mit einer ersten Lichtstrahlen (7) emittierenden flächigen Lichtquelle (2; 12; 22; 32; 42) und einem reflektierenden Optiksystem (4; 14; 24; 34; 44), das die von der ersten flächigen Lichtquelle emittierten Lichtstrahlen ablenkt,
**dadurch gekennzeichnet, dass** die Emissionsfläche der ersten flächigen Lichtquelle größer ist als 1 cm² und dass die erste flächige Lichtquelle (2; 12; 22; 32; 42) eine organische Leuchtdiode (62) ist.

2. Vorrichtung nach Anspruch 1,
**dadurch gekennzeichnet, dass** die erst flächige Lichtquelle Lichtstrahlen (7) in einer ersten Richtung (5) emittiert, und dass das reflektierende Optiksystem die in der ersten Richtung (5) emittierten Lichtstrahlen in eine sich von der ersten Richtung unterscheidenden zweiten Richtung (6) ablenkt.

3. Vorrichtung nach Anspruch 1 oder 2,
**dadurch gekennzeichnet, dass** das reflektierende Optiksystem aus einem oder mehreren Teilen (4; 14; 24; 34; 44) gebildet ist.

4. Vorrichtung nach einem der vorhergehenden Ansprüche,
**dadurch gekennzeichnet, dass** die Vorrichtung eine zweite flächige Lichtquelle (34; 441) umfasst.

5. Vorrichtung nach einem der vorhergehenden Ansprüche,
**dadurch gekennzeichnet, dass** wenigstens ein Teil des reflektierenden Optiksystems (34; 441) zu einer zweiten flächigen Lichtquelle gehört.

6. Vorrichtung nach dem vorhergehenden Anspruch,
**dadurch gekennzeichnet, dass** das reflektierende Optiksystem eine Elektrode einer organischen Leuchtdiode ist.

7. Vorrichtung nach einem der vorhergehenden Ansprüche,
**dadurch gekennzeichnet, dass** das reflektierende Optiksystem eine Geometrie aufweist, die ein Auffächern der von der ersten flächigen Lichtquelle emittierten Lichtbündel gewährleistet.

8. Vorrichtung nach einem der vorhergehenden Ansprüche,
**dadurch gekennzeichnet, dass** die erste flächige Lichtquelle transparent ist.

9. Vorrichtung nach Anspruch 1,
**dadurch gekennzeichnet, dass** die Emissionsfläche der ersten flächigen Lichtquelle größer ist als 10 cm².

10. Vorrichtung nach einem der vorhergehenden Ansprüche,
**dadurch gekennzeichnet, dass** die erste Lichtquelle in der zu ihrer emittierenden Fläche senkrechten Richtung eine im Vergleich zu Lambert-Leuchtdioden hohe Richtwirkung bei der Lichtemission aufweist.

11. Vorrichtung nach einem der vorhergehenden Ansprüche,
**dadurch gekennzeichnet, dass** die erste Lichtquelle eine Leuchtdichte von wenigstens 5.000 Cd/m² hat.

12. Vorrichtung nach einem der vorhergehenden Ansprüche,
**dadurch gekennzeichnet, dass** die Vorrichtung eine Signalleuchte ist.

13. Vorrichtung nach einem der vorhergehenden Ansprüche,
**dadurch gekennzeichnet, dass** die erste flächige Lichtquelle mehrere Licht emittierende Flächenelemente aufweist.

## Claims

1. Optical device (1; 11; 21; 31; 41) for a motor vehicle, in particular a signalling and/or lighting device, comprising a first surface light source (2; 12; 22; 32; 42) emitting light rays (7), and a reflective optical system (4; 14; 24; 34; 44) diverting the light rays emitted by the first surface light source, **characterised in that** the emission area of the first surface light source is greater than 1 cm² and **in that** the first surface light source (2; 12; 22; 32; 42) is an organic light emitting diode (62).

2. Device according to claim 1, **characterised in that** the first surface light source emits light rays (7) in a first direction (5) and **in that** the reflective optical system diverts the light rays emitted in the first direction (5), in a second direction (6) distinct from the first direction.

3. Device according to claim 1 or 2, **characterised in that** the reflective optical system consists of one or more parts (4; 14; 24; 34; 44).

4. Device according to one of the preceding claims, **characterised in that** the device comprises a second surface light source (34; 441).

5. Device according to one of the preceding claims, **characterised in that** at least part of the reflective optical system (34; 441) forms part of a second surface light source.

6. Device according to the preceding claim, **characterised in that** the reflective optical system is an electrode of an organic light emitting diode.

7. Device according to one of the preceding claims, **characterised in that** the reflective optical system has a geometry providing a spread of the light beams emitted by the first surface source.

8. Device according to one of the preceding claims, **characterised in that** the first surface source is transparent.

9. Device according to claim 1, **characterised in that** the emission area of the first surface light source is greater than 10 cm².

10. Device according to one of the preceding claims, **characterised in that** the first light source has a high emission directionality in the direction perpendicular to its emitting surface, compared with Lambertian light emitting diodes.

11. Device according to one of the preceding claims, **characterised in that** the first light source has a luminance of at least 5000 Cd/m².

12. Device according to one of the preceding claims, **characterised in that** said device is a signalling light.

13. Device according to one of the preceding claims, **characterised in that** the first surface source comprises a plurality of surface elements emitting light.
